# EUROPEAN PATENT APPLICATION

(11) **EP 4 268 573 A1**
(43) Date of publication of application: **01.11.2023**
(21) Application number: 22170215.2
(22) Date of filing: 27.04.2022
(51) Int. Cl.: A01G 7/00, A01G 31/02

(54) **INTELLIGENT GARDENING SYSTEM**

(71) Applicant: BSH Hausgeräte GmbH, 81739 München (DE)
(72) Inventor: Terrádez Alemany, Maria, 80337 München (DE); Tutal, Berkay Ogulcan, 81737 München (DE); Logsch, Torsten, 80798 München (DE); Dornik, Primoz, 3270 Lasko (SI); Holcinger, Tadej, 3220 Store (SI); Tan, E-Lin, 85591 Vaterstetten (DE); Zerak, Tadej, 3270 Lasko (SI); Longhino, Werner, 84561 Mehring (DE); Koell, Martin, 83362 Surberg (DE); Leng, Sascha, 80637 München (DE); Mora Garay, Laura Guadalupe, 81245 München (DE); Huber, Florentina, 85276 Pfaffenhofen (DE); Hartman, Kevin, 1000 Ljubljana (SI)

(57) **Abstract**

A method (200) for gardening comprises steps of determining the kind of a plant (120) and a time when growing the plant (120) was initiated; determining a current growing phase of the plant (120) on the basis of the kind of plant (120) and the age of the plant (120) through a knowledge system (110); determining a suggestion for treating the plant (120) according to the determined phase; and determining a user (145) input concerning an observed status of the plant (120); wherein the suggestion is determined on the additional basis of the user (145) input.

## Description

Present invention concerns the growing and cultivating of plants. More specifically, the invention concerns cultivating plants for horticultural use.

Herbs and spices which are to be used in a kitchen of a household may be cultivated with a domestic plant growing system. The system may be intended for indoor use and comprise a container for soil or hydroponics in which a seed may be planted. The system will then control growing conditions for the plant, typically by illuminating the plant and controlling its irrigation. Some systems may also control the dispensing of additives like a fertilizer to the plant.

While some systems comprise a sensor for determining the plant's growth, simpler systems are primarily time based. For instance a harvesting time for the plant may be anticipated on the basis of the average time a seed of the same kind of plant takes to fully develop. The plant will usually go through different growing phases which may call for different growing conditions. The growing phase may be determined from the plant's age, that is the time that has passed since the plant has started to grow.

An individual plant may show a significantly different development than predicted and planning of food preparation may be difficult if a plant that is scheduled to be processed at a specific time is either too ripe or not ripe enough. It is therefore an object of present invention to provide an improved technology for inexpensively managing plant growth. The invention solves above-mentioned object through the subject matter of the independent claims. Dependent claims describe preferred embodiments.

According to a first aspect of present invention, a method for gardening comprises steps of determining a kind of plant and a time when growing the plant was initiated; determining a current growing phase of the plant on the basis of the kind of plant and the age of the plant through a knowledge system; determining a suggestion for treating the plant according to the determined phase; and determining a user input concerning an observed status of the plant; wherein the suggestion is determined on the additional basis of the user input.

By accepting and processing a user observation, a sensor for monitoring the plant may be saved. The method may be easily implementable for instance on a home plant growing system without a sensor for plant growth. Observations may be simple for the user to take and may for instance comprise a plant size, colour or the cultivation of certain plant features like fruit or leaves. The user may also enter an observation that hints at a plant disease or a vermin.

The suggestion may comprise a treatment for the plant, e.g. information on advantageous illumination, irrigation or the addition of nutrients to the plant. The suggestion may be based on an intention of preference of the user like an intended harvesting time or a predetermined plant feature like colour, size or flavour to be optimized during growth. By basing the suggestion on the observation, an individual growing process of the plant may be taken into consideration. The growing result of the plant may match a predetermined harvesting date better and harvesting the plant may have better yield. Quality of the harvested plant may be improved. The user may have better use for the plant for food preparation.

Growing conditions of the plant may controlled according to the determined phase. This may be done through an automated plant growing system. The system may especially comprise an indoor gardening system and the system may be adapted for use in a household of the user. The method may be carried out on the gardening system or with its help. The gardening system may set growing parameters like an amount or frequency of irrigation, the adding of nutrients or an illumination parameter.

In one embodiment that will be discussed in more detail below, the plant growing system may be connected to a remote knowledge system. The knowledge system may be adapted to work together with a plurality of plant growing systems. Optionally, the knowledge base is adapted to implement machine learning techniques such as to improve determination quality over time by learning from user observations.

The suggestion may be determined on the additional basis of past growing conditions of the plant. Parameters controlling plant growth in the growing system may thus be related to the observation.

The suggestion may also be determined on the additional basis of a growing history of the plant. The growing history may comprise past observations of that plant.

It is furthermore proposed to take advantage of other parameters that may accompany a user observation so that the suggestion may be determined with more precision. In one embodiment, a user interface for controlling the plant growing system comprises a mobile device like a smartphone or a mobile computer. The user may enter his observation into a predetermined application running on the device. The device may capture sensor data indicative of growth conditions of the plant and associate the data with the observation.

In one embodiment the suggestion is determined on the additional basis of a surrounding condition at the time of observation. Such a condition may comprise for instance a temperature, an air pressure, an air quality, a region or position where the plant is located, a current weather or a current season. A contemporary mobile device may comprise sensors for determining one or more of the mentioned parameters. The air quality may be determined with a VOC (volatile organic compound) sensor and the weather may be determined by an online weather service on the basis of a position and time.

The observation may concern the growing phase of the plant. Should the user for instance detect a new leaf or the opening of a blossom, the beginning of a growing phase may be determined. It is not important for the user to know about growing phases, their detection or their botanical implications. By just sharing information on the plant's developments the significant information or an action to take may be determined automatically.

In another embodiment the user observation concerns a taste of the plant. The user may determine the taste before or after harvesting and possibly after processing the harvested plant into a dish. The taste may be one of the development goals of the plant. A pepper for instance will be expected to be hot and the relevant test for hotness will be the user's taste. Garden herbs may be expected to be aromatic. Some herbs are supposed to be sweet, others bitter. Fruit may be supposed to be aromatic or juicy, salad should be crisp. By identifying how good the plant is with respect to such sensory qualities, the suggestion for treating the plant may be further improved.

It is also proposed to update the knowledge system based on the observation and a time of observation. The determination of a growing phase of a plant may thus be carried out with more precision. Especially by taking account for at least one of the above-mentioned sources of extra information, growth forecast may be improved. In one embodiment the knowlegde system operates on conditional probabilities, using for example a Bayes filter. In another embodiment a feedback loop like a Kalman filter may be used. In yet another embodiment a machine learning technology may be employed for updating.

The suggestion may be determined on the additional basis of predetermined preferences of the user. Such preferences may comprise a harvesting history of the user, user preferences regarding an intended outcome of growing the plant, a user's favoured recipe for preparing a dish with the plant or preferences of comparable gardeners.

According to another aspect of current invention a gardening system comprises a container for receiving a plant; at least one actor for controlling growing conditions of the plant; a user interface unit that is adapted to accept a user observation concerning the plant; and a connection to a knowledge system that is adapted to determine a growing phase of the plant on the basis of the kind of plant and its age. The gardening system furthermore comprises processing means for determining a suggestion for treating the plant on the basis of the determined growing phase.

The gardening system may be adapted to carry out a method that is mentioned herein completely or in part. The processing means may comprise a micro computer or micro controller, an ASIC or a similar device. The method may be realised as a computer program product with program code means and may be stored on a computer readable media. Features or advantages of the method may be transferred to a corresponding device or system as well as vice versa.

According to yet another aspect of present invention a knowledge system for gardening comprises a database with botanical information on the development of a predetermined plant through different growing phases; a first interface for accepting information indicative of the kind of a plant and an age of the plant; and a second interface for providing a determined growing phase of the plant; wherein the knowledge system is adapted to accept an observed status of a specific plant; and to adapt the status determination process according to the observed status.

The knowledge system may be adapted to perform machine learning on observed plant status information.

The invention will now be discussed in more detail with reference to the enclosed drawings in which:
- figure 1: shows a system;
- figure 2: shows a flow diagram of a method; and
- figure 3: shows a schematic view of an exemplary knowledge system.

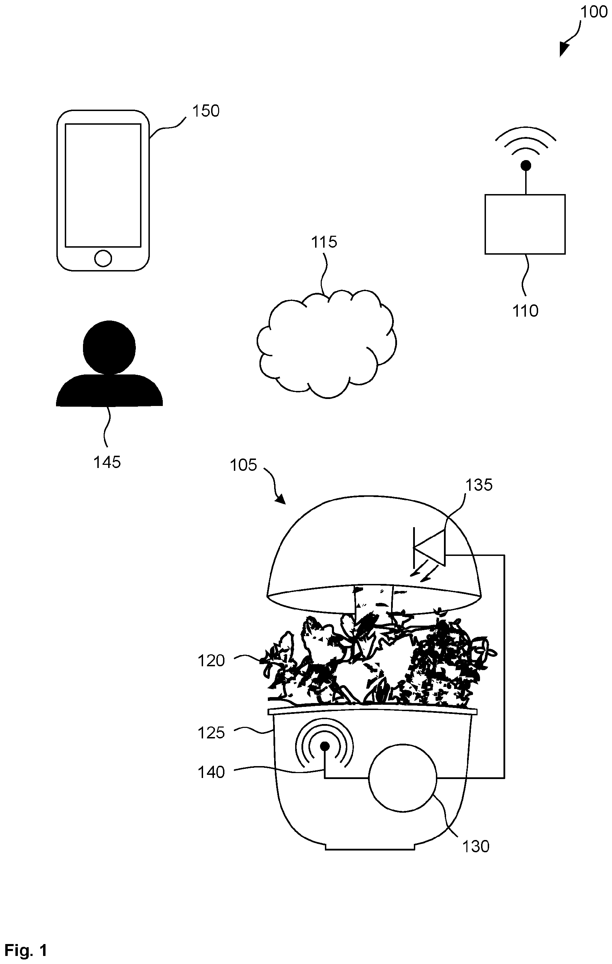

Figure 1 shows a system 100 comprising a plant growing system 105 and a knowledge base 110, both of which may be communicatively interconnected through a network 115. The network 115 may comprise any network, for instance a mobile network, a LAN or WLAN network or the internet.

The plant growing system 105 is adapted to control parameters under which a plant 120 may grow. The system 105 comprises a container 125 for receiving the plant 120, optionally in a growing cartridge that contains a seed of the plant 120 and a substrate. Substrate may also be received in the container 125. There may be a water tank for holding water or water may be received in the container 125 itself.

A control unit 130 is adapted to control at least one actuator 135 that influences growing conditions of the plant 120. In figure 1, the only actuator 135 comprises an illumination for the plant 120, in other embodiments more or other actuators 135 may be provided which may for instance control an amount of water made available to the plant 120, the addition of nutrients or fertilizer to the container 125 or some other environmental parameter. The control unit 130 may also be connected to a sensor which may for instance determine a water level in a water tank. The control unit 130 may be connected to a communication unit 140 that is preferred to be adapted for wireless communication.

A user 145 may interact with the growing system 105 through a mobile device 150 which may wirelessly communicate with the growing system 105. The mobile device 150 may host an application that facilitates output of information, messages or suggestions and may accept control or observation input. Optionally, the mobile device 150 may comprise an environmental sensor like a position sensor, a VOC sensor, a thermal sensor, a barometric pressure sensor, an illumination sensor or a clock. In one embodiment the mobile device 150 communicates directly with the plant growing system 105, in one other embodiment a network 115 is used for communication.

The user 145 may record when he starts growing the plant 120 in the plant growing system 105. A start time may be taken from a current time and a plant type of the plant 120 may be entered manually. The knowledge base 110 is preferred to comprise botanical information that indicates how long it usually takes for a seed of the selected kind to grow into the plant 120 and at what times a current growing phase may be expected to change. The growing environment of the plant 120 may be controlled according to the determined growing phase by the growing system 105.

In order to minimize deviation of the development of a specific plant 120 from an expected development, the user 145 may provide an observation he made of the plant 120. Such an observation may be related to a development of the plant 120 and comprise for example the development of a leaf or the opening of a burgeon. The observation may also be spontaneous to the user 145 and describe a current state of the plant 120, like its size, colour or the number of its leafs or buds. In one other embodiment the application running on the mobile device 150 may prompt the user 145 to make a general or specific observation and provide information accordingly.

The provided observation may be enriched by environmental parameters that may be taken through the mobile device 150. All or part of the collected information may be passed to the knowledge base 110 which may determine the plant's 120 growing phase from it.

The determined growing phase may not only be taken as a basis for controlling the growing system 105 but also to generate a suggestion to the user 145 concerning treatment of the plant 120. There may for instance be provided a projected harvesting time for the plant 120 or an optional addition to the plant 120 to control its development. The addition may comprise for instance a nutrient, a mineral or a pesticide. The suggestion may be based on a user preference like a desired development status or harvesting time of the plant 120 or a quality of the plant like its appearance or taste. The suggestion may take into account favourite recipes of the user 145 or preferences of other users 145 that may be comparable in their behaviour with respect to growing plants 120.

It is also suggested that the knowledge base 110 is adapted to receive information concerning a plurality of plants 120, preferably from a plurality of users 145 and/or a plurality of plant growing systems 120. The knowledge system may be adapted to adjust the growing phase determination process to the received data. In one embodiment, the knowledge base 110 may implement some artificial intelligence technology.

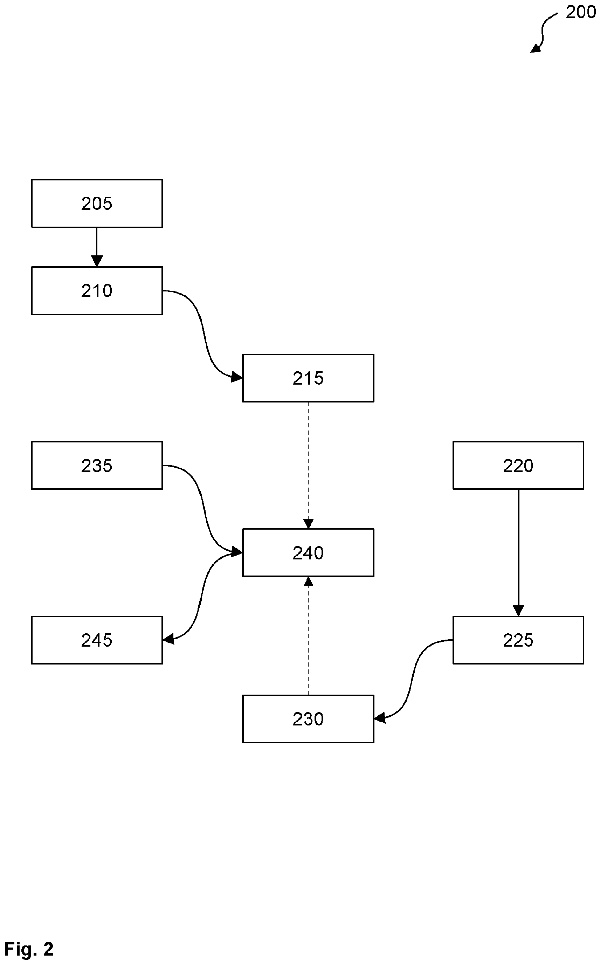

Figure 2 shows a flow diagram of an exemplary method 200. The method 200 is shown comprising three different parts that are related to each other, as indicated by dotted arrows, but may be carried out independently. Steps along a vertical centre of the drawing will typically be processed by the knowledge base 110 while steps left and right to the centre will be processed on site of a plant growing system 105.

In a step 205 the type of a plant 120 that is to be grown is detected. In a successive step 210, the time when the plant 120 is made to grow is recorded. This will typically be the case when a seed is placed inside the growing system 105 and the system 105 is made to control favourable growing conditions. In a step 215 the gathered information may be recorded.

In a step 220 the user 145 makes an observation of the plant 120 and enters the observation into the user interface. It is preferred that the user interface comprises the mobile device 150 and that the mobile device 150 comprises at least one sensor that is adapted to sample an environmental condition of the plant 120 at the time of making or entering the observation in a step 225. Such a condition may comprise e.g. a climatic region, the current weather or a current season. The gathered information may then be forwarded to the knowledge system 110 in a step 230 and filed for later use.

In a step 235 the user's 145 intention, preference or requirement for growing the plant 120 may be determined. Such information may comprise a desired outcome of growing the plant 120, either in the way the plant 120 develops or in the time when the development is finished or both. Also, a current environmental condition of the plant 120 may be determined.

In a successive step 240 the growing phase may be determined. Optionally, the determined environmental conditions or the user 145 preferences may be taken as a basis for the determination. The determination may also rely on previously gathered information, either from the specific plant 120 or from plants 120 of the same or a similar kind that preferably grew under similar environmental conditions.

On the basis of the determined growing phase, a suggestion for treating the plant 120 may be generated in a step 245. This step may also be carried out on the side of the knowledge base 110. An output may be presented to the user 145 or used to control growing parameters in the plant growing system 105.

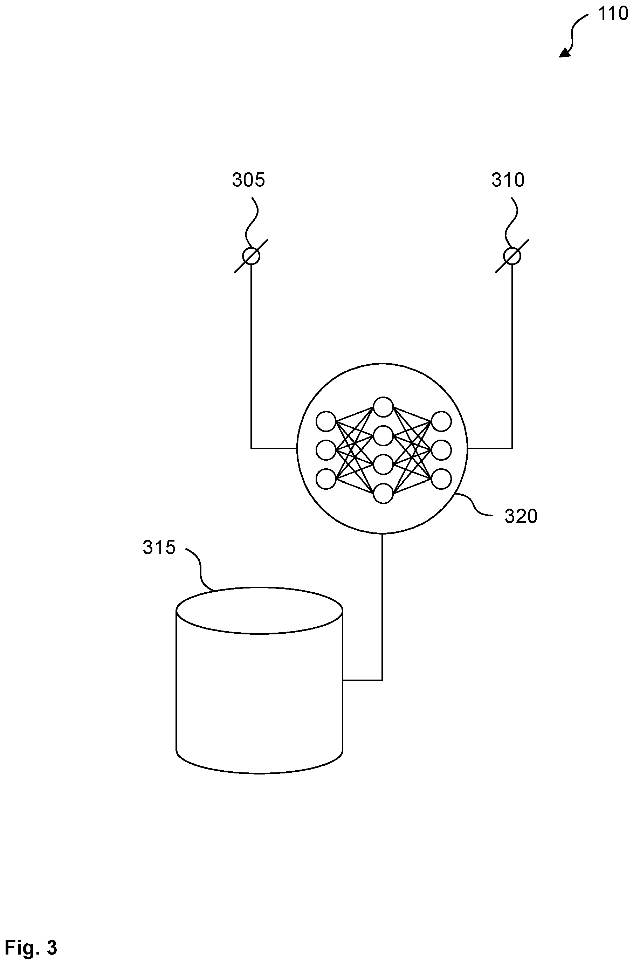

Figure 3 shows a schematic view of an exemplary knowledge system 110. The knowledge system 105 comprises a first interface 305 for accepting information indicative of the kind of a plant 120 and an age of the plant 120; and a second interface 310 for providing a determined growing phase of the plant 120. The interfaces 305, 310 may be integrated into one and may be wireless. A data storage 315 may contain botanical information on the development of various plants 120. Processing means 320 are adapted to determine a plant's 120 growing phase with respect to information provided on the first interface 305.

It is preferred that the knowledge system 110 is also adapted to use the information provided from observations of plants 120 to adapt and improve the botanical information. The processing means 320 may therefore comprise an artificial neural network ANN that is adapted to be trained to provide a plant's 120 growing phase on the basis of the plant's 120 kind and age. Additionally, present or history environmental conditions of the plant 120 may be considered.

### Reference Signs

- 100: system
- 105: plant growing system
- 110: knowledge base
- 115: network
- 120: plant
- 125: container
- 130: control unit
- 135: illumination
- 140: communication unit
- 145: user
- 150: mobile device

- 200: method
- 205: determine plant type
- 210: determine time of planting
- 215: file plant detail
- 220: determine input user observation
- 225: determine growing conditions
- 230: file plant observation
- 235: determine user preference / intention
- 240: determine growing phase
- 245: determine treating suggestion

## Claims

1. Method (200) for gardening, the method comprising the following steps:
- determining (205) the kind of a plant (120) and a time when growing the plant (120) was initiated;
- determining (240) a current growing phase of the plant (120) on the basis of the kind of plant (120) and the age of the plant (120) through a knowledge system (110);
- determining (240) a suggestion for treating the plant (120) according to the determined phase;
**characterized in** steps of
- determining (220) a user (145) input concerning an observed status of the plant (120);
- wherein the suggestion is determined (240) on the additional basis of the user (145) input.

2. Method (200) according to claim 1, wherein growing conditions of the plant (120) are controlled (245) according to the determined phase.

3. Method (200) according to claim 1 or 2, wherein the suggestion is determined (240) on the additional basis of past growing conditions of the plant (120).

4. Method (200) according to one of the above claims, wherein the suggestion is determined (240) on the additional basis of a growing history of the plant (120).

5. Method (200) according to one of the above claims, wherein the suggestion is determined (240) on the additional basis of a surrounding condition at the time of observation.

6. Method (200) according to one of the above claims, wherein the observation concerns the growing phase of the plant (120).

7. Method (200) according to one of the above claims, wherein the user (145) observation concerns a taste of the plant (120).

8. Method (200) according to one of the above claims, further comprising updating (240) the knowledge system (110) based on the observation and a time of observation.

9. Method (200) according to one of the above claims, wherein the suggestion is determined (240) on the additional basis of predetermined (235) preferences of the user (145).

10. Gardening system (105), comprising a container (125) for receiving a plant (120); at least one actor (135) for controlling growing conditions of the plant (120); a user (145) interface unit (150) that is adapted to accept a user (145) observation concerning the plant (120); and a connection (140) to a knowledge system (110) that is adapted to determine a growing phase of the plant (120) on the basis of the kind of plant (120) and the age of the plant (120); furthermore comprising processing means (130) for determining a suggestion for treating the plant (120) on the basis of the determined growing phase.

11. Knowledge system (110) for gardening; the knowledge system (110) comprising a database (315) with botanical information on the development of a predetermined plant (120) through different growing phases; a first interface (305) for accepting information indicative of indicative of the kind of a plant (120) and the plant's (120) age; and a second interface (310) for providing a determined growing phase of the plant (120); wherein the knowledge system (110) is adapted to accept an observed status of a specific plant (120); and to adapt the status determination process according to the observed status.

12. Knowledge system (110) according to claim 11, wherein the system is adapted to perform machine learning (320) on observed plant (120) status information.
